# EUROPÄISCHE PATENTSCHRIFT

(11) **EP 2 153 968 B1**
(45) Veröffentlichungstag und Bekanntmachung des Hinweises auf die Patenterteilung: **23.10.2019**
(21) Anmeldenummer: 09165885.6
(22) Anmeldetag: 20.07.2009
(51) Int. Cl.: B29C 44/60, B29C 44/38, B29C 44/34, B29K 75/00

(54) **Verfahren zur Herstellung eines Produktes aus reaktiven Ausgangsstoffen**
Method for producing a product from reactive source materials
Procédé de fabrication d'un produit à partir de matières de départ réactives

(30) Priorität: 31.07.2008 DE 102008035947
(43) Veröffentlichungstag der Anmeldung: 17.02.2010
(73) Patentinhaber: KraussMaffei Technologies GmbH, 80997 München (DE)
(72) Erfinder: Schiemann, Lutz, 85221, Dachau (DE)
(74) Vertreter: Roider, Stephan

(56) Entgegenhaltungen:
- EP-A2- 0 633 276
- DE-A1- 1 504 904
- DE-A1- 2 318 794

## Beschreibung

Die vorliegende Erfindung betrifft ein Verfahren zur Herstellung eines Produktes aus reaktiven Ausgangsstoffen gemäß dem Oberbegriff des Anspruchs 1.

Entsprechende Verfahren sind vielfach bekannt, insbesondere zur Herstellung eines Produktes aus einem Polyurethan-Material. Dabei wird bei der Herstellung eines Produktes aus einem Polyurethan-Material eine Isocyanat-Komponente sowie eine Polyol-Komponente zumeist in einem Mischkopf miteinander innig vermischt und dieses Gemisch dann in die Kavität eines Formwerkzeugs eingebracht. Im Formwerkzeug härtet das Gemisch zum fertigen Produkt aus, so dass es anschließend aus dem Formwerkzeug entnehmbar ist.

Generell gibt es dabei verschiedene Möglichkeiten das Gemisch der Ausgangsmaterialien in die Form einzubringen. Es gibt die Möglichkeit der Einbringung in ein bis auf den Angusskanal an sich geschlossenes Formwerkzeug, an welches der Mischkopf "angedockt" wird.

Es gibt aber auch die Möglichkeit der Einbringung des Gemisches in ein offenes Formwerkzeug, welches nach dem Einbringen geschlossen wird. Dabei ist es insbesondere bekannt, das Gemisch aus den Ausgangskomponenten entlang eines bestimmten Weges mit einem Mischkopf kontinuierlich auf die Kavitätsoberfläche des Formwerkzeugs auszubringen. Dieser Vorgang dauert, abhängig von der Größe des Werkzeugs, eine bestimmte Zeit, die natürlich umso länger wird, je größer das Werkzeug ausfällt. Die Reaktion der reaktiven Ausgangsmaterialien, beispielsweise des Isocyanats sowie des Polyols, startet jedoch bereits beim Beginn der Einbringung des Gemisches in die offene Werkzeugform. Dies bedeutet, dass das eingebrachte Gemisch bei Beendigung des Einbringvorgangs je nach Werkzeugposition bereits eine unterschiedliche Reaktionszeit (Aufschäumzeit) hinter sich hat, wobei die Extreme einer besonders langen Reaktionszeit beim Startpunkt gegenüber einer relativ geringen Reaktionszeit beim Endpunkt der Einbringung liegen.

Die Reaktionszeit, in der das Produkt ausreagiert, nennt man auch Aufschäumzeit. Die Aufschäumzeit ist neben Temperaturbedingungen unter anderem von den Ausgangsmaterialien abhängig. Es kann beispielsweise eine Polyol-Komponente so gewählt werden, dass eine längere oder eine kürzere Aufschäumzeit realisiert ist. Wird nun eine Polyol-Komponente mit einer langen Aufschäumzeit für ein großes Werkstück verwendet, so führt dies zu einer langen Zykluszeit und zu einer ineffizienten Produktion. Wird eine Polyol-Komponente mit einer kurzen Aufschäumzeit verwendet, so beginnt die Ausreaktion zu schnell und der Aufschäumprozess ist bereits dann - zumindest in dem Gebiet, in dem mit dem Eintrag begonnen wird - signifikant fortgeschritten, was dazu führen kann, dass beim Schließen des Werkzeugs die Schaumstruktur in diesem Bereich beschädigt oder beeinträchtigt wird.

Aus der DE 101 45 439 A1 ist ein Verfahren zur Herstellung von reaktionsverzögerten Polyurethanhartschaumstoffen bekannt, bei der durch eine Kombination verschiedener Polyole das Reaktivitätsverhalten dahingehend eingestellt werden kann, dass die Reaktion verzögert und damit kontroliert abläuft, ohne Verlängerung der Abbindezeit.

Die EP 269 873 A2 beschreibt die Herstellung von kompakten Elastomeren. Zur Erzielung möglichst kurzer Zykluszeiten bei der Herstellung von Formkörpern einerseits zur Reduzieung der Formstandzeiten muss die Durchhärtung der Formteile deutlich verbessert werden und andererseits dürfen die Saumzeiten nicht zu kurz sein. Dies wird durch Auffinden geeigneter Katalysatoren sichergestellt.

In der DE 10 2006 018 812 A1 ist ein Verfahren und eine Vorrichtung zum Mischen reaktiver Kunststoffkomponenten beschrieben. Den reaktiven Ausgangsstoffen können bei Bedarf Zuführstoffe begement werden, um so verschiedene Aufschäumzeiten zu realisieren.

Schließlich beschreibt die WO 2007/135069 A1 eine Vorrichtung zur Herstellung von Polyurethanschaumstoffen, die eine Reaktionsmischung mit zwei Polyolkomponenten neben der Isocyanatkomponente enthält.

Ferner beschreibt die EP 0 633 276 A2 ein Verfahren zum Herstellen von Formteilen und Füllungen aus PU-Schaumstoffen, wobei ein Aktivator dem Reaktionsgemisch in der Mischkammer oder dem Polyol kurz vor der Mischkammer im Sinne einer überall möglichst gleichzeitig einsetzenden Abbindezeit in zeitlich steigender Menge zugesetzt wird.

Aufgabe der vorliegenden Erfindung ist es, ein Verfahren und eine Vorrichtung bereitzustellen, welche zum einen für größere Werkzeugformen eine optimale Aufschäumzeit erreichen. Andererseits soll die gleiche Vorrichtung für unterschiedliche Werkzeuggrößen verwendbar sein und sich damit möglichst universell und einsetzen lassen.

Die vorgenannte Aufgabe wird verfahrensmäßig durch die im Anspruch 1 genannten Merkmale und vorrichtungsmäßig durch die im Anspruch 6 genannten Merkmale gelöst.

Ein Kerngedanke der vorliegenden Erfindung ist darin zu sehen, dass Ausgangs-Komponenten (evtl. auch Additive) die bei Vermischung unterschiedliche Aufschäumzeiten besitzten, verwendet werden und das Mischungsverhältnis dieser Ausgangs-Komponenten während des Einbringvorgangs verändert wird. Dies ermöglicht die Bereitstellung eines Gemischs zum Startpunkt des Einbringvorgangs mit einer längeren Aufschäumzeit, die Veränderung des Gemischs während des Einbringvorgangs in der Hinsicht, dass die Aufschäumzeit verringert wird und die Beendigung des Einbringvorgangs mit einem Gemisch, welches eine wesentlich kürzere Aufschäumzeit aufweist.

Wird dann das Formwerkzeug nach Beendigung des Einbringvorganges geschlossen, ist das Gemisch auch im Formbereich des Einspritzbeginns noch nicht zu stark aufgeschäumt, so dass die Zellstruktur durch das Schließen des Formwerkzeugs nicht beeinträchtigt werden kann. Doch auch eine zu lange Gesamtaufschäumzeit ist nicht zu erwarten, da im Formbereich des Endes des Einbringvorgangs die Aufschäumzeit kürzer bemessen ist.

Insbesondere kann eine Dosierung von zwei Polyol-Komponenten verwendet werden, derart, dass der Aufschäumvorgang über das gesamte Produkt, auch wenn es großflächig ist, im wesentlichen zur gleichen Zeit abgeschlossen ist. Dabei kann die Veränderung des Mischungsverhältnisses unterschiedlich gewählt werden. Es können beispielsweise während der ersten Hälfte des Einbringvorgangs ein erstes Mischungsverhältnis und während der zweiten Hälfte des Einbringvorgangs ein zweites Mischungsverhältnis gewählt werden. Alternativ können mehrere Stufen von Mischungsverhältnissen eingestellt werden. Natürlich ist es auch möglich, und sogar bevorzugt, das Mischungsverhältnis während des Einbringvorgangs kontinuierlich zu ändern.

Bei der kontinuierlichen Änderung des Mischungsverhältnisses ist es generell wünschenswert, die Mischung so zu verändern, dass die Aufschäumzeit sich mit zunehmendem Ausbringvorgang verkürzt. Dies ist jedoch nicht unbedingt erforderlich. Es kann auch wünschenswert sein, beispielsweise an sehr dünnen Stellen des späteren Produkts, die Aufschäumzeit und damit das Mischungsverhältnis anders anzusetzen als an dickeren Stellen. Insofern kann es auch erstrebenswert sein, in einem bestimmten Einbringbereich den Aufschäumvorgang wieder länger zu gestalten bzw. das Mischungsverhältnis derart zu verändern, dass sich die Aufschäumzeit verlängert.

Gemäß einer besonderen Ausführungsform der vorliegenden Erfindung wird das Mischungsverhältnis so gewählt, dass der Aufschäumvorgang, also die Reaktion, erst dann signifikant startet, wenn die Werkzeugform nach dem Ausbringvorgang geschlossen werden konnte.

Eine Vorrichtung zur Durchführung des Verfahrens ist in Anspruch 6 angegeben und weist als besonderes Merkmal neben den zwei Behältnissen für die Polyol-Komponenten eine steuer- und regelbare Dosiereinrichtung auf, die die Mischung bzw. das Mischungsverhältnis bestimmt.

Eine Ausführungsform der vorliegenden Erfindung wird mit Bezug auf die beiliegenden Zeichnungen näher erläutert. Die Zeichnungen zeigen in:
- **Fig. 1:**: in schematischer Weise die Draufsicht auf ein großflächiges Werkzeug mit markiertem Fahrweg eines Mischkopfs und
- **Fig. 2:**: eine erfindungsgemäße Vorrichtung zur Durchführung des Verfahrens.

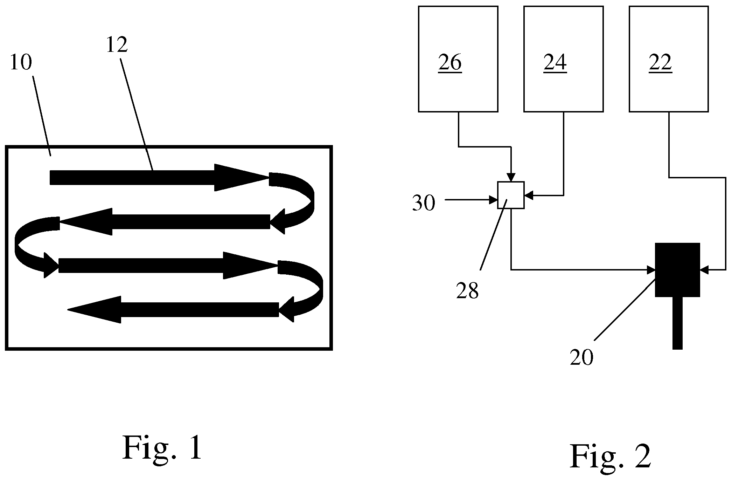

In Fig. 1 ist in schematischer Weise die Draufsicht auf die untere Hälfte einer offenen Form eines Formwerkzeugs dargestellt, wobei mit der Bezugsziffer 10 die Kavitätsfläche des Werkzeugs darstellt ist. In diesem Kavitätsteil wird das Gemisch der reaktiven Ausgangsmaterialien eingebracht und zwar entlang des serpentinenartigen Weges 12. Dabei wird ein Mischkopf 20 von einem Robotarm entsprechend geführt, wobei kontinuierlich das Gemisch ausgetragen wird. Am Ende des Einbringvorgangs wird der Gemischeintrag gestoppt und - nicht dargestellt - die bisher offene Werkzeugform durch Absenken der oberen Formhälfte geschlossen, woraufhin das eingebrachte Gemisch zum fertigen Produkt aushärtet.

Eine Vorrichtung mit der das erfindungsgemäße Verfahren durchgeführt werden kann, ist in Fig. 2 gezeigt. In Fig. 2 sind drei Behältnisse 22, 24 und 26 dargestellt, wobei das Behältnis 22 für die Isocyanat-Komponente und die Behältnisse 24 und 26 für Polyol-Komponenten verwendet sind. Dabei unterscheiden sich die Polyol-Komponenten in den Behältnissen 24 und 26 dadurch, dass sie zusammen mit der Isocyanat-Komponente des Behältnisses 22 eine längere (Behältnis 24) und eine kürzere (Behältnis 26) Aufschäumzeit hervorrufen. Die Behältnisse 24 und 26 sind mit einer steuerbaren Dosiereinrichtung 28 über Leitungen verbunden. In der steuerbaren Dosiereinrichtung 28 kann das Mischungsverhältnis der beiden Polyol-Komponenten festgelegt werden. Dieses Dosierverhältnis hängt vom Steuerbefehl über die Leitung 30 ab, welcher von einer nicht dargestellten Steuereinrichtung ausgegeben wird. Die so miteinander vermischten Polyol-Komponenten werden aus der Dosiereinrichtung 28 an einen Mischkopf 20 abgegeben, dem auch die Isocyanat-Komponente aus dem Behältnis 22 zugeführt wird. Beide Komponenten (Polyol und Isocyanat) werden in dem Mischkopf innig vermischt und durch das schematisch dargestellte Auslaufrohr auf die Form ausgetragen. Natürlich könnten die verschiedenen Polyol-Komponenten dem Mischkopf auch in der jeweiligen Dosierung unter Verzicht auf eine eigene Dosiereinrichtung zugeführt werden.

Nicht dargestellt ist ein Robotarm, an dem der Mischkopf 20 befestigt ist. Mit dem Robotarm lässt sich der Mischkopf 20 entlang des gewünschten Weges über die Formkavität verfahren. Der Robotarm ist ebenfalls mit der nicht dargestellten Steuereinrichtung verbunden und erhält von dieser das Bewegungssignal. Damit weiß die Steuereinrichtung, an welcher Position sich der Robotarm bzw. der Mischkopf 20 befindet. Entsprechend kann die Dosiereinrichtung 28 gesteuert werden.

Insbesondere wird die Dosiereinrichtung 28 so gesteuert, dass zu Beginn des Gemischeintrags eine relativ lange Aufschäumzeit erreicht wird. Diese Aufschäumzeit soll sich kontinuierlich entlang des Weges 12 verringern. Dies wird dadurch erreicht, dass in der Dosiereinrichtung 28 die Mischung zwischen den verschiedenen Polyol-Komponenten aus den Behältnissen 24 und 26 kontinuierlich verändert wird. Zum Ende des Einbringvorgangs wird eine Mischung gewählt, welche eine relativ kurze Aufschäumzeit besitzt.

Auf diese Art und Weise kann man unabhängig von der Größe des Formwerkzeugs eine Mischung der verschiedenen Polyol-Komponenten zusammenstellen, die abhängig vom Einbringort in die Kavität in optimaler Zeit aufschäumt. Bei großen Formteilen wird so eine Aufschäumzeit gewählt, die sich signifikant über den Einbringweg verändert. Bei kleineren Formteilen kann die Aufschäumzeit über das Formteil gesehen in etwa gleich groß gewählt werden. Damit eignet sich diese Vorrichtung auch in besonders flexibler Weise für die verschiedensten Formen.

### Bezugszeichenliste

- 10: Untere Formhälfte einer Form
- 12: Weg beim Eintragen der Mischung mittels eines Mischkopfes
- 20: Misch kopf
- 22: Isocyanatbehältnis
- 24: Behältnis für erstes Polyolmaterial
- 26: Behältnis für zweites Polyolmaterial
- 28: Dosiergerät
- 30: Steuereingang für Dosiergerät

## Patentansprüche

1. Verfahren zum Herstellen eines Kunststoffproduktes aus zumindest zwei reaktiven Ausgangskomponenten, nämlich einer Ausgangskomponente erster Art und einer Ausgangskomponente zweiter Art, wobei es sich bei der Ausgangskomponente erster Art um eine Isocyanat-Komponente und bei der Ausgangskomponente zweiter Art um eine Polyol-Komponente handelt, bei dem
- die die reaktiven Ausgangskomponenten miteinander gemischt werden,
- das Gemisch anschließend entlang eines vorgegebenen Weges (12) in eine offene Form (10) einer Werkzeugform eingebracht wird und
- die Werkzeugform geschlossen wird, um das Gemisch zum Kunststoffprodukt zumindest im Wesentlichen aushärten zu lassen, so dass es nach dem Öffnen aus der Werkzeugform entnehmbar ist,
**dadurch gekennzeichnet, dass**
zumindest zwei Ausgangs-Komponenten der zweiten Art verwendet werden, die unter Vermischung mit der Ausgangskomponente der ersten Art zu unterschiedlichen Reaktionszeiten führen, und das Mischungsverhältnis der zumindest zwei Ausgangs-Komponenten zweiter Art während des Einbringvorganges derart verändert wird, dass die Reaktionszeit sich mit zunehmenden Ausbringvorgang verändert.

2. Verfahren nach Anspruch 1,
**dadurch gekennzeichnet,**
**dass** die Veränderung des Mischungsverhältnisses kontinuierlich durchgeführt wird.

3. Verfahren nach einem der Ansprüche 1 oder 2,
**dadurch gekennzeichnet,**
**dass** das Mischungsverhältnis der Ausgangs-Komponenten zweiter Art derart gewählt wird, dass sich die Aufschäumzeit mit zunehmendem Ausbringvorgang kontinuierlich verkürzt.

4. Verfahren nach einem der vorhergehenden Ansprüche,
**dadurch gekennzeichnet,**
**dass** das Mischungsverhältnis der Ausgangs-Komponenten zweiter Art zu Beginn des Ausbringvorgangs derart gewählt wird, dass das Aufschäumen erst nach dem Beenden des Ausbringvorganges sowie dem Schließen der Werkzeugform beginnt.

5. Verfahren nach einem der vorhergehenden Ansprüche,
**dadurch gekennzeichnet,**
**dass** das Mischungsverhältnis während des Ausbringvorgangs derart verändert wird, dass nach dem Schließen der Form (10) die Zeit bis zur Beendigung des Aufschäumvorgangs für jeden Teil des befüllten Werkzeugs im Wesentlich gleich ist.

6. Vorrichtung zur Durchführung eines Verfahrens nach einem der Ansprüche 1 - 5, umfassend
- ein Behältnis (22) für die Ausgangs-Komponente erster Art,
- zumindest zwei Behältnisse (24, 26) für die Ausgangs-Komponente zweiter Art,
- eine steuer- oder regelbare Dosiereinrichtung (28), die mit beiden Behältnissen (24, 26) für die Ausgangs-Komponenten zweiter Art verbunden ist,
- einen Mischkopf (20), der mit dem Behältnis (22) für die Ausgangs-Komponente erster Art sowie der Dosiereinrichtung (28) verbunden ist, sowie einer elektrischen Steuereinrichtung zur Beaufschlagung der Dosiereinrichtung, die auch zur Steuerung einer Ausbringvorrichtung geeignet ist, wobei die Steuerung dazu ausgelegt ist, das Vermischungsverhältnis der Ausgangskomponenten während des Ausbringvorganges zu verändern.

## Claims

1. A method for producing a plastic product from at least two reactive source components, namely a source component of a first type and a source component of a second type, wherein the source component of the first type is an isocyanate component and the source component of the second type is a polyol component, in which
- the reactive source components are mixed with one another,
- the mixture is subsequently introduced along a predetermined path (12) into an open mould (10) of a mould tool and
- the mould tool is closed, in order to allow the mixture to at least substantially harden to form the plastic product, so that after opening it is able to be removed from the tool mould,
**characterized in that** at least two source components of the second type are used, which on mixing with the source component of the first type lead to different reaction times, and the mixture ratio of the at least two source components of the second type during the introducing process is changed in such a way that the reaction time changes with an increasing output process.

2. The method according to Claim 1, **characterized in that** the change of the mixture ratio is carried out continuously.

3. The method according to one of Claims 1 or 2, **characterized in that** the mixture ratio of the source components of the second type is selected in such a way that the foaming time shortens continuously with an increasing output process.

4. The method according to one of the preceding claims, **characterized in that** the mixture ratio of the source components of the second type at the start of the output process is selected in such a way that the foaming begins only after the terminating of the output process and the closing of the mould tool.

5. The method according to one of the preceding claims, **characterized in that** the mixture ratio during the output process is changed in such a way that after the closing of the mould (10) the time up to the termination of the foaming process is substantially identical for each part of the filled tool.

6. A device for carrying out a method according to one of Claims 1-5, comprising
- a container (22) for the source component of the first type,
- at least two containers (24, 26) for the source component of the second type,
- a controllable or adjustable metering device (28), which is connected with the two containers (24, 26) for the source components of the second type,
- a mixing head (20), which is connected with the container (22) for the source component of the first type and with the metering device (28), and an electrical control device for acting on the metering device, which is also suitable for controlling an output device, wherein the control is designed to change the mixture ratio of the source components during the output process.

## Revendications

1. Procédé de fabrication d'un produit en plastique à partir d'au moins deux composantes de départ réactives, à savoir une composante de départ d'un premier type et une composante de départ d'un second type, dans lequel il s'agit d'une composante d'isocyanate pour la composante de départ d'un premier type et d'une composante de polyol pour la composante de départ d'un second type, dans lequel
- les composantes de départ réactives sont mélangées entre elles,
- le mélange est ensuite inséré dans un moule (10) ouvert d'un moule d'outil le long d'un trajet (12) prédéfini et
- le moule d'outil est fermé pour faire au moins essentiellement durcir le mélange en un produit de plastique, de façon à ce qu'il puisse être prélevé du moule d'outil après l'ouverture,
**caractérisé en ce qu'**au moins deux composantes de départ d'un second type sont employées, qui conduisent à différents temps de réaction par le mélange avec la composante de départ d'un premier type, et le rapport de mélange des au moins deux composantes de départ d'un second type est modifié de telle façon durant le processus d'apport que le temps de réaction se modifie à mesure que le processus de rendement augmente.

2. Procédé selon la revendication 1, **caractérisé en ce que** la modification du rapport de mélange est réalisée en continu.

3. Procédé selon l'une des revendications 1 ou 2, **caractérisé en ce que** le rapport de mélange des composantes de départ d'un second type est ainsi sélectionné que le temps de moussage est réduit en continu à mesure que le processus de rendement augmente.

4. Procédé selon l'une des revendications précédentes, **caractérisé en ce que** le rapport de mélange des composantes de départ d'un second type au début du processus de rendement est ainsi sélectionné que le moussage commence seulement après la fin du processus de rendement ainsi que la fermeture du moule d'outil.

5. Procédé selon l'une des revendications précédentes, **caractérisé en ce que** le rapport de mélange, durant le processus de rendement, est ainsi modifié qu'après la fermeture du moule (10), le temps jusqu'à la fin du processus de moussage est essentiellement égal pour chaque partie de l'outil rempli.

6. Procédé d'exécution d'un procédé selon l'une des revendications 1 à 5, comprenant :
- un récipient (22) pour la composante de départ d'un premier type,
- au moins deux récipients (24, 6) pour la composante de départ d'un second type,
- un dispositif de commande ou de régulation (28) qui est relié aux deux récipients (24, 26) pour les composantes de départ d'un second type,
- une tête de mélange (20) qui est reliée au récipient (22) pour la composante de départ d'un premier type ainsi qu'au dispositif de dosage (28), ainsi qu'à un dispositif de commande électrique pour alimenter le dispositif de dosage qui est également approprié pour commander un dispositif de rendement, dans lequel la commande est conçue pour modifier le rapport de mélange des composantes de départ pendant le processus de rendement.
